Europäisches Patentamt

European Patent Office

Office européen des brevets

(19)

(11) Publication number: **0 108 587**
**A2**

## (12) EUROPEAN PATENT APPLICATION

(21) Application number: 83306629.3

(22) Date of filing: 31.10.83

(51) Int. Cl.³: **G 01 M 3/38**
**B 25 J 5/02, H 04 N 7/18**
**//G01B5/00**

(30) Priority: 02.11.82 GB 8231302

(43) Date of publication of application:
16.05.84 Bulletin 84/20

(84) Designated Contracting States:
AT BE CH DE FR IT LI LU NL SE

(71) Applicant: Yarnell, Ian Roland
Unit 106B, Blackdown Industries Haste Hill
Haslemere Surrey GU27 2HA(GB)

(72) Inventor: Yarnell, Ian Roland
Unit 106B, Blackdown Industries Haste Hill
Haslemere Surrey GU27 2HA(GB)

(74) Representative: Blatchford, William Michael et al,
Withers & Rogers 4 Dyer's Buildings Holborn
London EC1N 2JT(GB)

(54) Remotely controllable inspection camera apparatus.

(57) Remotely controllable inspection apparatus intended for use in inaccessible, confined spaces such as pipe interiors, especially sewer pipe interiors, has an articulated arm (32) supporting a closed circuit television camera (52) at its distal end. The arm (32) is pivotally mounted on a carriage (24) which is itself longitudinally slidable on a sledge (10). The arm (32) can be elevated about a first, horizontal pivot axis (34), a distal portion (54) of the arm (32) can be swung to one side or the other about a second pivot axis (58), an outer part of the distal portion (54) is rotatable about a longitudinal axis (80), and the camera (52) can be swivelled on the end of the arm (32) about a transverse swivel axis (76). The range of movements provided allows the camera (52) to be positioned off-axis in a pipe and gives a remote operator the ability to inspect the wall of the pipe at close range and to view the interior of lateral branches where they join the pipe. The movement functions described above are all controlled hydraulically for reliability and resistance to immersion in water. The invention includes hydraulic devices for performing these functions, as well as a hydraulically controlled focussing mechanism for the camera (52).

Fig.1.

- 1 -

## REMOTELY CONTROLLABLE INSPECTION CAMERA
APPARATUS

This invention relates to a remotely controllable inspection camera apparatus and to devices associated with it. The invention has particular application to the inspection of pipework, especially in connection with the renovation of sewers.

In several countries, the older parts of sewer systems are now deteriorating to an extent such that renovation is becoming increasingly necessary. Renovation may consist of repairing from within, by remote control, certain sewer sections which have collapsed, or of lining a complete length of sewer with a plastics pipe or in-situ formed plastics lining and subsequently cutting holes in the lining to connect the interior of the lining with lateral branch pipes. A machine for cutting holes in sewer linings is disclosed in my co-pending British Patent Application No.83 08503.

. In such renovation methods, the initial inspection of the pipe interior, grouting operations, and hole-cutting are generally carried out with a remotely controlled closed circuit T.V. camera mounted on a sledge or trolley which is propelled through the pipe. Such remotely controlled cameras are also used for inspecting pipe interiors in a variety of other fields, such as chemical plant or oil pipelines, for inspecting boiler interiors, and in other confined spaces where providing entry for a man would be either impracticable, very expensive, or dangerous.

One of the limitations on the use of a remote T.V.

camera in confined spaces has been the length of the camera. In relatively small diameter pipes, particuarly pipes having an internal diameter less than 300mm, the length of the camera was often such that it could only be used in an axial orientation in the pipe, a prism or mirror being required to view satisfactorily the interior wall of the pipe. In recent years shorter cameras have become available, but known inspection equipment employing such cameras has failed to take full advantage of their compactness, the extent to which they allow a short camera to be manipulated being limited.

It is an object of this invention to provide inspection camera apparatus which is more versatile than known apparatus intended for use in confined spaces, and which is relatively reliable in operation.

According to one aspect of the invention, a remotely controllable inspection camera apparatus comprises swivellable viewing means mounted at or adjacent the distal end of an arm which is pivotally supported on an elongate mobile base. The viewing means preferably comprises the main light receiving components of a television camera, specifically an objective lens and a vidicon tube. These are mounted in a camera housing, which may be typically in the region of 120 to 150 mm in length. The apparatus allows the camera to be moved in a plurality of directions, so that in a sewer pipe it can be positioned off-axis relative to the pipe axis. This is particularly convenient for close-up inspection of a lateral branch pipe at its junction with the main sewer pipe. It will be appreciated that such 'laterals' do not always join the main sewer pipe on a radius.

The preferred embodiment has additional movement functions, provided for instance by mounting the arm on a carriage which is longitudinally movable on the base. Pivoting of the arm is advantageously possible about two axes to give elevational adjustment as well as side-to-side adjustment. Side-to-side pivoting may be achieved by splitting the arm into a distal portion and a proximal portion with a pivotal connection between the two portions. A further very useful feature is the ability to rotate the camera about a longitudinal axis of the arm.

For reliability in a wet environment and in the presence of debris generated during the cutting of a pipe or lining, most, preferably all, the movement functions afforded by the apparatus of the invention may be hydraulically driven. With suitable sealing precautions, a completely submersible apparatus can be built.

Various means are employed for converting the linear movement of a hydraulic ram into rotational movement. When the range of movement is relatively small, say 90 degrees, a crank mechanism may be used. Larger angular ranges are obtained by a sprocket and chain arrangement (in this case for swivelling the camera) or by driving a block along a helical keyway (here used to produce axial rotation in the distal portion of the arm).

The apparatus supporting the camera may be used for other purposes in accordance with the invention, so that instead of being used to manipulate a television camera, it can be provided with a number of devices or tools for performing other operations required in lining a damaged sewer pipe.

- 4 -

In the preferred embodiment the rams for swivelling the camera and for rotating it about the longitudinal axis of the arm are combined into a single relatively compact assembly. Thus, according to another aspect of the invention, a fluid driven ram assembly comprises a first, inner cylinder housing a circular piston, and at least a second outer cylinder containing an annular piston encircling the inner cylinder. The inner ram has a piston rod coupled to the helical rotation mechanism referred to above. This rod projects from one end of the assembly. The annular piston of the outer ram has two spaced apart piston rods extending from the other end of the assembly to drive a pair of chain and sprocket mechanisms on either side of the longitudinal axis of the arm for swivelling the camera through a range of at least 180 degrees. One alternative to using such an assembly would have been to mount two or four conventional rams side-by-side in the arm, but this solution is less efficient in its use of the limited cross-sectional area of the arm and in the use of materials. The coaxial arrangement makes full use of the limited cross-sectional area and length of this part of the arm, the increased area contributing to superior precision in the control of the rotation and swivelling movements.

With the stringent size limitations on an apparatus of the type with which this invention is concerned, and the demand for apparatus which can travel down smaller diameter pipes than has been possible previously, any reduction in the length of the camera is beneficial. Although a fixed focus camera is adequate for many inspection applications, in many instances means for

focussing the camera to different distances by remote control are essential. This adds to the length and the complexity of the camera. According to a further aspect of the invention, there is provided a television camera comprising a camera housing, a focussing lens mounted in a sleeve which is axially movable on the housing by remote control, wherein the sleeve and the housing are shaped such that at least one annular chamber is formed between the sleeve and the housing for receiving fluid under pressure thereby to cause axial movement of the sleeve relative to the housing. Since the fluid chamber or chambers are located at the side of the housing, the only additional length contributed by the focussing components is that of the necessary lens mounting elements and the travel of the lens, both of which are relatively short compared to, for instance, an electric motor and associated gear mechanism. Being fluid actuated, the focussing mechanism can be simple, robust, and substantially unaffected by water and dirt.

The invention will now be described by way of example with reference to the drawings in which:-

Figure 1 is a perspective view of camera apparatus in accordance with the invention for inspecting the interiors of pipes;

Figure 2 is a side view of the apparatus of Figure 1 with the camera swivelled to an upwardly directed raised position;

Figure 3 is an underside view of a sledge and longitudinally movable carriage forming part of the apparatus of Figure 1;

Figure 4 is a plan view of a support arm and camera forming part of the apparatus of Figure 1, with the camera directed to the left hand side of the apparatus;

Figure 5 is a side view corresponding to Figure 4 with the camera omitted;

Figure 6 is an enlarged sectional view of part of the arm viewed from the same direction as in Figure 5; and

Figure 7 is a sectional side view of the television camera forming part of the apparatus of Figure 1.

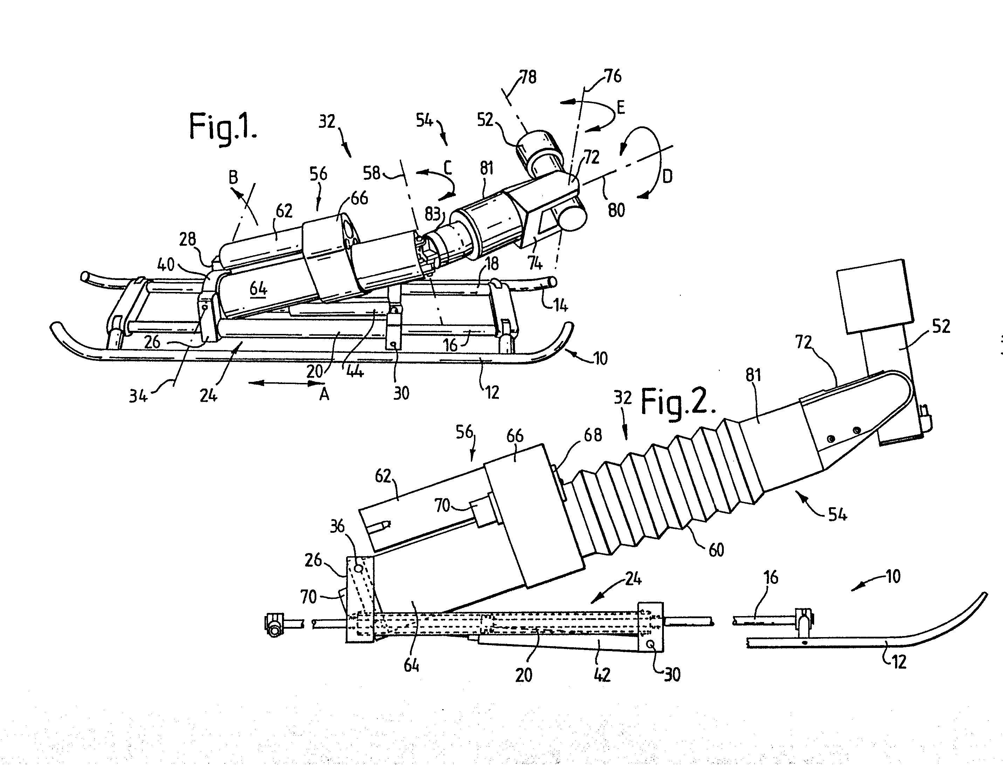

Referring to Figures 1 to 3, a remotely controllable inspection camera apparatus comprises an elongate mobile base 10 in the form of a sledge having skids 12 and 14 and a chassis comprising a pair of parallel rods 16 and 18 supported on the skids. These rods 16 and 18 constitute the piston rods of two double-ended, double-acting hydraulic rams 20 and 22, each rod having, fixed to it, a piston approximately midway between the ends of the rod. The cylinders of the rams 20 and 22 form part of a longitudinally and linearly movable carriage 24 having two rear uprights 26 and 28 and a front lower crossbar 30.

The carriage serves as the support for a cantilevered camera support arm 32. The arm 32 as a whole is capable of pivoting about a horizontal first pivot axis 34 defined by pivot pins 36 connecting a rear housing 40 of the arm to the uprights 26 and 28. Lifting power for elevating the arm 32 from a first position adjacent the sledge 10 to a second raised position in which it is at an angle of at least 45$^o$ to the rods 16 and 18 (the maximum elevation is preferably in the range 60$^o$ to 90$^o$)

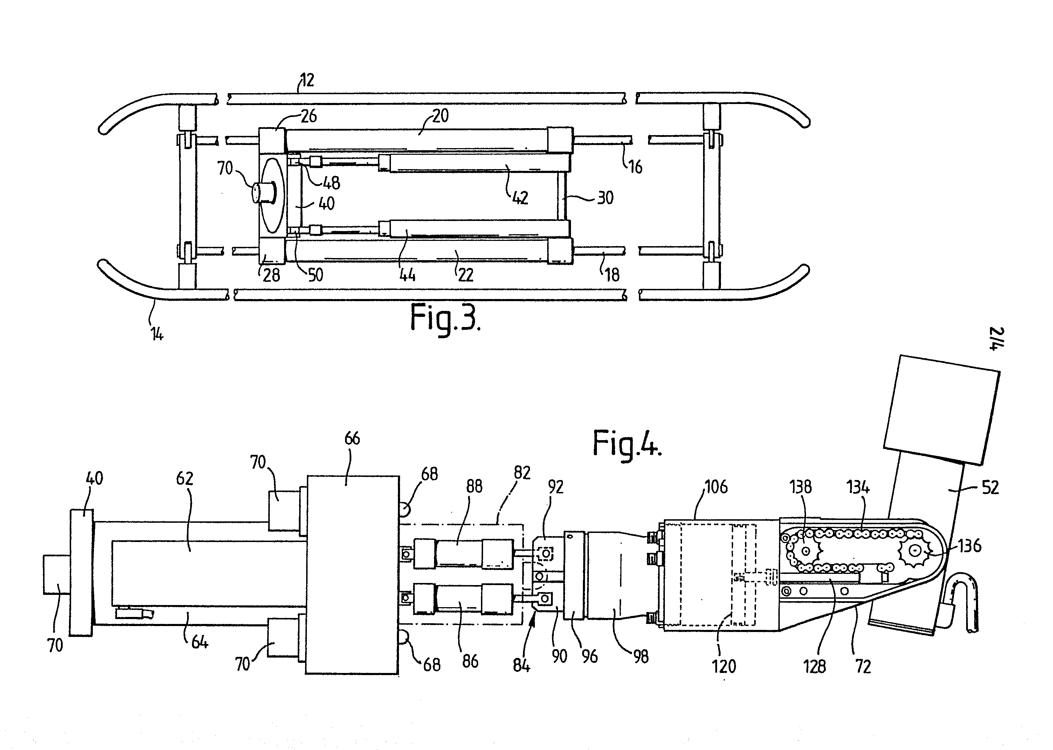

is furnished by two longitudinally mounted elevation rams 42 and 44 each pivotally connected at both ends between the crossbar 30 and pins housed in slots 48 and 50 in the lower part of the rear arm housing 40. This is best seen in the underside view of Figure 3.

The arm 32 carries a main camera 52 at its distal end and is articulated approximately midway along its length, a distal portion 54 of the arm being pivotable relative to a proximal portion 56 about a second pivot axis 58 lying in a vertical plane perpendicular to the first pivot axis 34. Normally, the mechanism connecting the two portions 54 and 56 is covered by a flexible rubber gaiter 60 as shown in Figure 2. The connecting mechanism performs the dual functions of providing the sole support for the distal portion 54 and allowing the side-to-side pivoting of the distal portion 54 relative to the carriage 24 and base 10.

The proximal portion 56 of the arm 32 carries an auxiliary camera 62 looking forwards along the arm 32. The electronic circuitry for this camera and the main camera 52 comprises three printed circuit boards (not shown) contained in a cylindrical casing 64 joining the rear housing 40 and a front housing 66, the camera 62 being fitted in a bore in the top of the front housing 66 together with a pair of lamps 68. It should be noted that the cables connecting the cameras to the electronic circuitry and to the remote control station are omitted from the drawings for clarity, as are all hydraulic supply pipes. However, the main electrical connection sockets 70 are visible in Figure 1, 2 and 3.

Still referring to Figures 1 and 2, the distal portion 54 carries the main camera 52 between its jaws 72 and 74 and has a hydraulically driven swivelling mechanism (to be described below) for swivelling the camera 52 about a transverse axis 76 (transverse relative to the arm 32) so that the viewing axis 78 of the camera is pivotable between a transverse orientation and an orientation parallel to the longitudinal axis 80 of the distal portion 54. Yet a further movement function is the ability to rotate an outer part 81 of the distal portion 54 about the longitudinal axis 80 relative to an inner part 83 (see Figure 1).

At this stage, it is convenient to summarise the several movement functions of the apparatus with reference to the arrows in Figure 1:-

A: Longitudinal adjustment;

.B: Elevation about axis 34;

C: Side-to-side pivoting about axis 58;

D: Rotation about longitudinal axis 80; and

E: Swivelling of the camera 52 about axis 76.

This range of movement permits close-up inspection of a sewer pipe interior for a wide range of pipe diameters with the ability to penetrate laterals joining the sewer pipe at a variety of angles. An operator at a remote control station has the facility to look along a pipe when for example the sledge is being pulled to a required location. He can also look along the pipe off-axis, should the sledge ride up the sides of the pipe. When the required location is reached the camera can be tilted to a lateral orientation to look at the wall of the pipe, either at close range, or at a distance, and if required the arm can be swung and/or elevated to look into a lateral branch pipe or to inspect around the edge of a hole cut in a pipe lining.

The performing of movement functions C, D and E referred to above will now be described with reference to Figures 4, 5 and 6. In these figures the camera 52 is turned on its side.

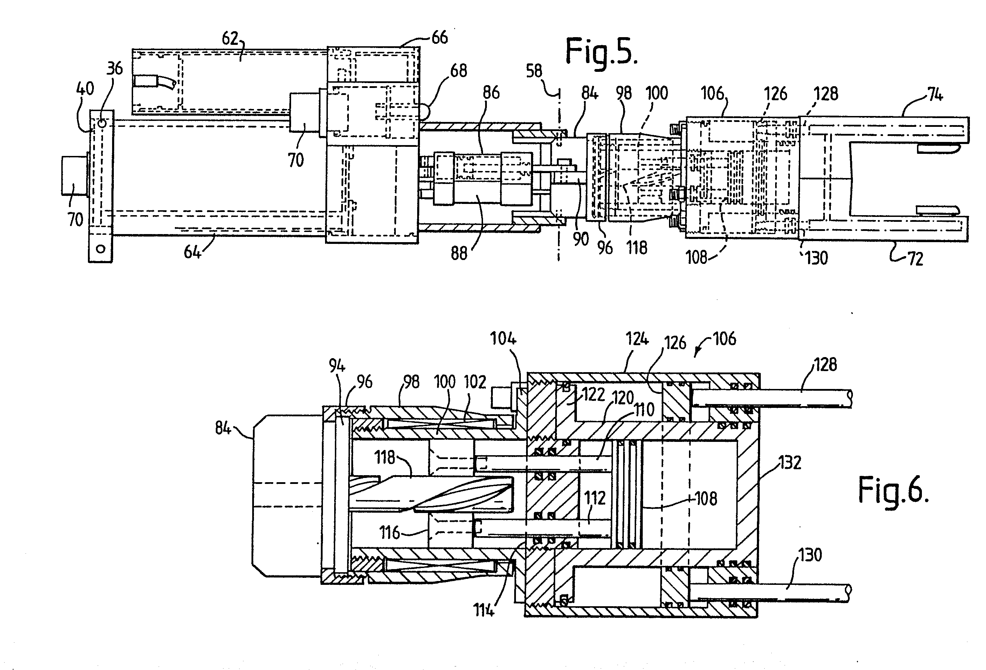

Referring firstly to Figures 4 and 5, the outer part of the proximal portion of the arm 32 comprises a shell 82 (shown dotted in Figure 4) having upper and lower fingers supporting a rear end piece 84 of the distal portion 54. The end piece 84 has a transverse section in the shape of a cross, the vertical leaves connecting the distal portion 54 to the fingers via pivots defining the second pivot axis 58. Control of this movement is provided by a pair of rams 86 and 88 mounted side-by-side longitudinally inside the shell 82, their piston rods picking up on pivots on the two generally horizontal leaves 90 and 92 of the end piece 84, these leaves acting as crank elements for converting the linear action of the rams into a rotary action centred on pivot axis 58.

Referring now to Figure 6, the end piece 84 has a small flange 94 which is clamped by an internally threaded ring 96 to an outer sleeve 98. A cylindrical inner sleeve 100 is rotatable inside a needle roller bearing 102 inside the outer sleeve 98 and has a large front flange 104 bolted to the end plate of a coaxial ram assembly 106. This ram assembly contains an inner piston 108 coupled to a pair of inner piston rods 110 and 112 passing through an end plate 114, the near ends of the rods being secured to a plunger block 116 which engages a helically grooved stub 118 fixed to the end piece 84. The plunger block 116 has inner projections (not shown) which engage the grooves in the stub 118 and also has slots (not shown) for engaging ribs (also not shown) in the interior of the inner sleeve 100 to prevent the block 116 from rotating inside the sleeve 100. Upon operation of the inner piston 108, the plunger block 116 is forced along the fixed stub 118, causing the block 116, the inner sleeve 100, and the ram assembly 106 to rotate on the bearing 102 relative to the stationary outer sleeve 98 and end piece 84. In this way, the linear movement of the piston 108 is converted into rotational motion of the ram assembly, and consequently of the camera 52, about the longitudinal axis of the distal portion.

The inner piston 108 of the ram assembly 106 moves in an inner cylinder 120 shaped in the form of a top hat with its brim 122 attached to the end plate 114 of the assembly. Coaxial with the inner cylinder 120 is an outer cylinder 124 housing a second piston 126. This is an annular piston completely encircling the inner cylinder 120 and connecting to a pair of diametrically opposite piston rods 128 and 130 extending through seals in the front face 132 of the assembly. Both rams in the ram assembly 106 are double-acting in that they can each be independently pressurised from either end.

The purpose of the outer ram of the ram assembly 106 is to swivel the camera 52 about a transverse axis, as will now be described with reference to Figure 4.

The camera 52 is supported in a pair of jaws 72 and 74 housing two chain and sprocket drive mechanisms each comprising a chain 134, a driven sprocket 136 and an adjustable position idler sprocket 138. (Belts and sheaves may be used in place of chains and sprockets.) The spacing of the chain and sprocket mechanisms matches the spacing between the forwardly projecting piston rods 128 and 130, so that each rod can be coupled directly to a respective chain 134. Operation of the outer ram of the ram assembly 106 drive sprockets 136 which are attached to the camera 52 thereby to swivel the camera 52 about the transverse axis 80 defined by the sprockets 136.

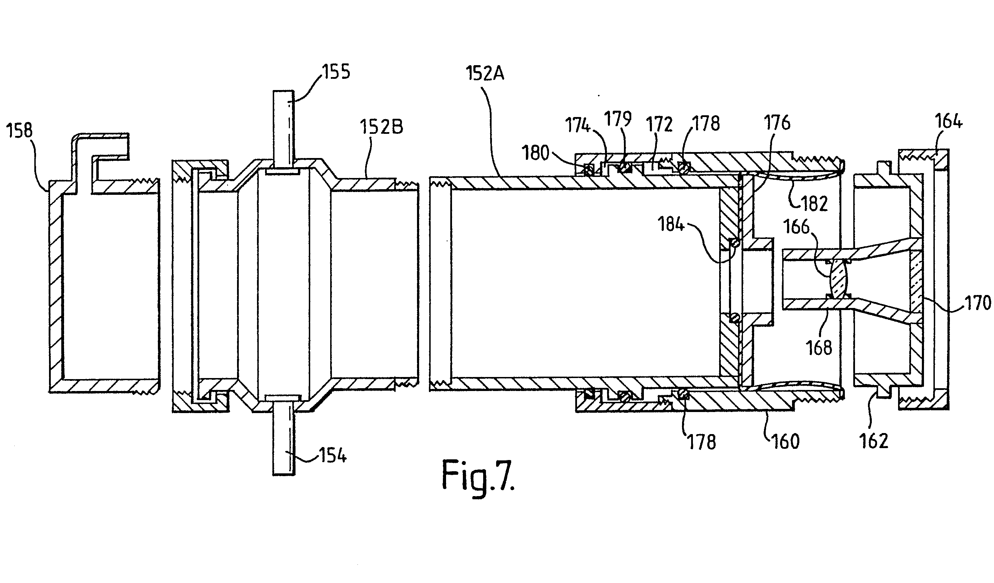

The camera 52 itself is provided with a compact hydraulically operated focussing device, as shown in section in Figure 7. The camera 52 has a casing which is split into three main sections, each movable relative to each other. The camera tube, electronics and terminations (not shown) are mounted in a tubular housing which has two parts 152A and 152B. Two splined pins 154 and 155 protrude from opposite sides of the rear housing part 152B for mounting the camera between the jaws 72 and 74 of the distal portion 54 (Figure 1). A rotatable rear end cap 158 houses and supports the end of the camera cable (not shown). The front part 152A of the housing carries an external sliding sleeve portion 160. This sleeve portion is shaped to receive a perspex front end cap 162 which is held in place by a threaded ring 164. The purpose of the sleeve portion 160 and end cap 162 is to carry the objective lens 166 of the camera, this being housed in a steel tube 168 fitted in the cap 162. A small glass cover 170 is inserted in the end of the tube 168 for protection. The complete focussing assembly of sleeve portion 160, end cap 162, tube 168 and lens 166, is slidable longitudinally on the housing 152A in response to changes in fluid pressure in two annular chambers 172 and 174 formed between the inner surfaces of the sleeve portion and the outer surface of the housing. Each chamber is filled with hydraulic fluid and connected to a respective small bore control tube (not shown), the tubes joining a bundle of control tubes from the various rams referred to above, which tubes all extend back to the remote control station.

The camera 52 is provided with an annular array of lamps (not shown) mounted on the end plate 176 of the housing for illuminating objects in front of the camera.

Seals are fitted to the housing 152A as follows. Three O-rings 178, 179 and 180 are seated in grooves between the chambers 172 and 174. A flexible rubber sealing sleeve 182 is clamped at one end in the end of the housing part 152A and at its other end in the sleeve portion 160 to prevent any fluid leaking past the seal 178 from reaching the optical and electrical components of the camera. A smaller O-ring 184 in the front end of the housing 152A provides a sliding seal around the steel tube 168.

Although the camera 52 is intended primarily for pipe inspection with the sledge being drawn through a pipe by a winch and cable arrangement, other uses are

- 13 -

**0108587**

possible with or without some of the supporting apparatus shown in Figures 1 to 6.  For example, the camera 52 and part of the arm 32 may be detached from the sledge, carriage and proximal portion of the arm and mounted on alternative supports for inspecting, for example, the inside of chambers, etc. having only small diameter access openings.

In addition, the apparatus shown in the drawings can be used for manipulating tools and devices other than the camera 52.

CLAIMS

1. Remotely controllable inspection camera apparatus for use in a confined space comprising swivellable viewing means (52) mounted at or adjacent the distal end of an arm (32) which is pivotally supported on an elongate mobile base (10).

2. Apparatus according to claim 1, wherein the viewing means (52) is swivellable about an axis (76) extending transversely relative to the arm (32) and has a viewing axis (78) which is generally perpendicular to the swivelling axis (76).

3. Apparatus according to claim 2, wherein the viewing means (52) is a television camera comprising an objective lens (166) and a television camera tube.

4. Apparatus according to claim 1, wherein the base (10) comprises a pair of skids (12, 14).

5. Apparatus according to claim 1, wherein the arm (32) is pivotally supported in the region of a proximal end portion thereof on a carriage (24) which is linearly movable on the base (10) in a longitudinal direction.

6. Apparatus according to claim 1, wherein at least a distal portion (54) of the arm (32) is pivotable about first and second mutually perpendicular pivot axes (34, 58) relative to the base (10), both pivot axes extending transversely of the arm (32).

7.    Apparatus according to claim 6, wherein the arm (32) comprises a cantilever, being pivotally supported solely at or in the region of its proximal end.

8.    Apparatus according to claim 7, wherein the arm (32) is pivotable about said first pivot axis (34) at or in the region of the proximal end between a first lowered position adjacent the base (10) and a second elevated position in which the distal portion (54) of the arm (32) is raised above the base (10).

9.    Apparatus according to claim 6, wherein the arm (32) is articulated, the distal portion (54) being pivotable about the second pivot axis (58) relative to a proximal portion (56) of the arm (32) and being supported solely by the proximal portion (56).

10.    Apparatus according to claim 9, wherein the second pivot axis (58) lies in a substantially vertical plane.

11.    Apparatus according to claim 2, wherein the viewing means (52) is rotatable about a longitudinal axis (80) of the arm (32).

12.    Apparatus according to claim 11, including respective fluid driven rams for swivelling the viewing means (52) about the  swivelling axis (76) and for rotating the viewing means (52) about the said longitudinal axis (80) of the arm (32).

13. Apparatus according to claim 12, comprising two fluid driven rams for respectively swivelling and rotating the viewing means (52), the cylinder (124) of one ram being coaxially located outside the cylinder (120) of the other ram, the said one ram having an annular piston (126) which encircles the cylinder (120) of the said other ram.

14. Apparatus according to claim 13, wherein the said one ram has a pair of diametrically opposite parallel piston rods (128, 130) which are connected to respective belts or chains (134) engaging respective sheaves or sprockets (136) on opposite sides of the viewing means (52) for swivelling the viewing means (52) when the said one ram is operated.

15. Apparatus according to claim 1, including second viewing means (62) mounted on the arm (32) and having a viewing axis extending generally longitudinally of the arm (32).

16. Apparatus according to claim 9, wherein the arm (32) includes at least one longitudinally mounted ram (86, 88) mounted in the proximal portion (56) and coupled to a crank member (90, 92) on the distal portion (54) for pivoting the distal portion (54) about the second pivot axis (58).

17.  A fluid driven ram assembly comprising a first, inner cylinder (120) housing a circular piston (108), and at least a second outer cylinder (124) containing an annular piston (126) encircling the inner cylinder (120).

18.  A ram assembly according to claim 17, comprising at least one inner piston rod coupled to the circular piston (108) and extending from one end of the inner cylinder (120), and at least a pair of outer piston rods (128, 130) coupled to the annular piston (126) and extending from the oppositely directed end of the outer cylinder (124).

19.  A ram assembly according to claim 17, wherein one of the pistons (108) is coupled to a helical drive mechanism (116, 118) for converting longitudinal movement of the piston (108) to relative rotational movement of a component (52) coupled to the mechanism about the central longitudinal axis of the assembly.

20.  A remotely controllable manipulator  for operation in a confined space, the manipulator comprising an elongate mobile base (10) a carriage (24) longitudinally movable on the base (10), an arm (32) having a distal portion (54) including means (72, 74) for mounting a tool or device, and a proximal portion (56) supported on the carriage (24),  at least the distal portion (54) being pivotable relative to the carriage (24) about two mutually perpendicular pivot axes (34, 58) extending generally transversely relative to the arm (32).

21. A manipulator according to claim 20, wherein the said mounting means (72, 74) is rotatable about a longitudinal axis (80) of the arm (32).

22. A manipulator according to claim 20, including fluid driven rams for moving the carriage (24) on the base (10), and for pivoting at least the distal portion (54) of the arm (32) relative to the carriage (24).

23. Remotely controllable inspection camera apparatus for use in a confined space comprising an elongate mobile base (10), a carriage (24) mounted on the base (10) and linearly movable relative to the base (10) in a longitudinal direction, a camera arm (32) having a proximal portion (56) mounted on the carriage (24) and a distal portion (54) supported solely by the proximal portion (56), and a television camera (52) secured to the distal portion (54), the camera (52) being swivellable about a transverse axis (76) between a first position in which it is directed longitudinally of the arm (32), and a second position in which it is directed perpendicularly relative to the arm (32).

24. Apparatus according to claim 23, wherein at least the distal portion (54) of the arm (32) is pivotable relative to the base (10) about a first horizontal pivot axis (34), and a second generally vertical pivot axis (58).

25. A remotely controllable manipulator for use in a confined space comprising an elongate mobile base (10), an articulated arm (32) having a proximal portion (56) pivotally mounted on the base (10) and a distal portion (54) supported solely by the proximal portion (56), means (72, 74) at or adjacent an outer end of the distal portion for swivellably mounting a tool or device, the distal portion (54) being pivotable relative to the proximal portion (56) about a pivot axis (58) extending transversely of the arm in response to actuation of at least one fluid driven ram (86, 88) mounted longitudinally in the arm (32).

26. A manipulator according to claim 25, including two fluid driven rams (86, 88) mounted longitudinally in the proximal portion (56) of the arm (32), the distal portion (54) having two crank members (90, 92) extending on opposite sides of the pivot axis (58), each crank member (90, 92) being coupled to a piston rod of a respective ram (86, 88).

27. A television camera comprising a camera housing (152A, 152B), a focussing lens (166) mounted in a sleeve (160) which is axially movable on the housing by remote control, wherein the sleeve (160) and the housing (152A, 152B) are shaped such that at least one annular chamber (122) is formed between the sleeve (160) and the housing (152A, 152B) for receiving fluid under pressure thereby to cause axial movement of the sleeve (160) relative to the housing (152A, 152B).

1/4

Fig.1.

Fig.2.

Fig.3.

Fig.4.

0108587

Fig.5.

Fig.6.

0108587

Fig.7.

158  155  152B  152A  174  179  172  178  176  164  180  182  184  166  170  168  178  160  162  154

4/4

0108587